**Europäisches Patentamt**

**European Patent Office**

**Office européen des brevets**

(19)

(11) Veröffentlichungsnummer: **0 188 763 B1**

(12) **EUROPÄISCHE PATENTSCHRIFT**

(45) Veröffentlichungstag der Patentschrift: **29.08.90**

(51) Int. Cl.⁵: **B 23 K 7/10,** B 23 K 9/32

(21) Anmeldenummer: **85116183.6**

(22) Anmeldetag: **18.12.85**

(54) Verfahren zur Steuerung bzw. Regelung von Gasmengen.

(30) Priorität: **24.12.84 DE 3447381**
**22.03.85 DE 3510382**

(43) Veröffentlichungstag der Anmeldung:
**30.07.86 Patentblatt 86/31**

(45) Bekanntmachung des Hinweises auf die
Patenterteilung:
**29.08.90 Patentblatt 90/35**

(84) Benannte Vertragsstaaten:
**AT BE CH FR GB IT LI NL SE**

(56) Entgegenhaltungen:
**DE-A-1 908 296**
**DE-B-2 247 012**
**US-A-3 533 442**
**US-A-4 439 249**

(73) Patentinhaber: **MESSER GRIESHEIM GMBH**
**Hanauer Landstrasse 330**
**D-6000 Frankfurt/Main (DE)**

(72) Erfinder: **Becker, Karl August**
**Bergstrasse 21**
**D-6365 Rosbach (DE)**
Erfinder: **Gollwitz, Karl**
**Offenthaler Strasse 7**
**D-6073 Egelsbach (DE)**
Erfinder: **Gutermann, Trangott**
**Am Lerchenberg 9**
**D-6074 Rödermark (DE)**

Courier Press, Leamington Spa, England.

EP 0 188 763 B1

# EP 0 188 763 B1

## Beschreibung

Die Erfindung betrifft ein Verfahren zum Brennschneiden, Wärmen, Flämmen oder Schweißen von Werkstücken nach dem Oberbegriff des Anspruches 1.

Bei der Steuerung bzw. Regelung der Durchflüßmengen Q(f)P, speziell in der Schweiß- und Schneidtechnik, ist es bekannt, den Heiz- und Schneidsauerstoff nach den Betriebstabellen für Maschinenschneiddüsen vor Inbetriebnahme der Autogenanlage manuell mittels Steuerdruckminderer einzustellen. Die werkstückdickenabhängigen Mengen und Schaltzeiten werden dabei zum Lochstechen und anschließenden Brennschneiden durch Magnetventile und Relais gesteuert. Die entsprechende Menge Brenngas wird dem Heizsauerstoff durch Handregelventile am Brennereingang zugeordnet.

Nach der DE—A—16 27 569 ist es vorteilhaft, wenn bei einem Lochstechvorgang während des Anheizvorganges mit oxidierender Heizflamme gearbeitet wird, die intensiver heizt, wobei nach dem Anheizen wieder die normale Heizflamme durch Reduzierung des Heizsauerstoffdruckes eingestellt wird. Gleichzeitig wird das Schneidsauerstoffventil allmählich geöffnet, so daß nach etwa 2 Sekunden der volle Schneidsauerstoffdruck ansteht. Ebenfalls gleichzeitig mit dem Öffnen des Schneidsauerstoffventiles wird die Schneidbewegung eingeschaltet. Das langsame Öffnen des Schneidsauerstoffventiles bewirkt, daß nicht sofort der maximale Schneidsauerstoffdruck anliegt. Dieses Verfahren wird mit Einrichtungen verwirklicht, die aus Motorventilen und Druckminderer-Magnetventilkombinationen bestehen.

Weiterhin ist es bekannt, beim Lochstechvorgang den Schneidsauerstoffdruck durch Aufteilung der Schneidsauerstoffleitung in drei Druckbereiche aufzuteilen. Zu Beginn wird zuerst mit einem schwachen Sauerstoffstrom die Leitung von "Falschluft" gespült, anschließend mit einem eingestellten Zwischendruck das Werkstück durchgestochen und danach der für den Schneidvorgang erforderliche Schneidsauerstoffdruck eingestellt (DE—B—22 47 012).

Die bisherigen Maßnahmen haben in der Praxis weiterhin den Nachteil, daß die Funktionssicherheit trotz erhöhten Aufwandes für die Regelkreise nicht voll gewährleistet ist und mit erhöhtem zeitlichen und kostenmäßigen Aufwand durch Düsenverschleiß gearbeitet werden muß, besonders beim Lochstechen mit mehreren Schneidbrennern gleichzeitig. Dabei ist es nötig, für jede Druckstufe einen eigenen Steuerkreis vorzusehen, der entsprechend den Erfordernissen während des Brennschniedens zu- oder abgeschaltet wird. Dies führt einerseits zu einer aufwendigen und großen Steuereinheit und andererseits zu einer diskontinuierlichen Steuerung bzw. Regelung der Gase. Mit einer derartigen Einrichtung können insbesondere beim Lichstechvorgang in größere Materialdicken Probleme auftreten, da die Koordinierung der Drücke mit der Brennerbewegung nur beschränkt erfolgt. Die dann bei einer Relativbewegung entstehenden Spritzer führen zu einer Verringerung der Brennerstandzeit und somit zu einer Erhöhung der Brennschneidnebenzeiten.

Ferner können beim Zu- oder Abschalten einzelner Maschinenschneidbrenner die eingestellten Durchflüßmengen sich ändern, so daß ein weiteres Nachregulieren von Hand an den Handregelventilen am Brenner erforderlich ist.

Das eingangs geschilderte manuelle Einstellen der Steuerdruckminderer kann entfallen, wenn Ventile verwendet werden, die für eine automatische Kontrolle zugänglich sind, wie durch Solenoids, Druckluft oder elektrische Signale. In der US—A—4,439,249 wird hierzu ein Verfahren vorgeschlagen, bei dem in Abhängigkeit von der Temperatur im Brennschnittspalt und in dessen Nachbarschaft der Schneidsauerstoff- und Brenngaszustrom sowie die Schneidbrennergeschwindigkeit verändert werden. Die Änderungen erfolgen in Abhängigkeit von einem Algorithmus, der in einem Computer abgelegt ist.

Nachteile ergeben sich bei einem derartigen prozeßabhängigen Verfahren, daß Abstandsänderungen des Brenners und/oder Änderungen des Einfallwinkels der Wärmestrahlung zu unterschiedlichen Steuersignalen und damit zu unbefriedigenden Schnittqualitäten führen. Hinzu kommt, daß an jedem Brenner zwei Sensoren angeordnet werden müssen, wodurch sich die Kollisionsgefahren und der technologische Aufwand erhöht. Die Werkstoff- und brenngasabhängigen Parameter, wie z.B. die Werkstoffdicke werden mit dem vorgeschlagenen Algorithmus nur ungenügend berücksichtigt und ein Lochstechvorgang kann nicht automatisch ausgeführt werden.

Der Erfindung liegt die Aufgabe zugrunde, eine Gasmengenregelung zu schaffen, die leicht handhabbar, einfach aufgebaut und vielseitig einsetzbar ist.

Diese Aufgabe wird bei einem gattungsgemäßen Verfahren durch die kennzeichnenden Merkmale des Anspruches 1 und bei einer gattungsgemäßen Einrichtung durch die kennzeichnenden Merkmale des Anspruches 5 gelöst.

Die mit der Erfindung erzielten Vorteile bestehen insbesondere in der genauen und an jede Bearbeitungsaufgabe anpaßbaren Steuerung bzw. Regelung der Gase.

Durch die Druckkonstanzregelung ändern sich beim Zu- oder Abschalten einzelner Maschinenschneidbrenner die Durchflußmengen bei den einzelnen Brennern nicht.

Für die Untersuchung auf Druckkonstanz bei kleiner und großer Mengenänderung mit allen Düsengrößen von 3 bis 300 mm, ausgehend von zuerst vier Brennern und nacheinander Abschalten bis auf einen Brenner mit anschließendem Zuschalten bis auf vier Brenner wurden für alle Linien am Brenneingang und am Verteiler die Drücke gemessen. Die Manometer am Verteiler und am Brenner zeigten den gleichen Druck an.

2

# EP 0 188 763 B1

Die Durchflußmengenänderungen von 4 × Q auf Q und von Q auf 4 × Q ergeben die nachfolgenden Druckabweichungen P vom Ist-Wert.

| Düsen-größe | | Durchflußmenge m³/h | | Druckdiffer. (bar) | Betriebs-druck (bar) |
|---|---|---|---|---|---|
| | | 1 Brenner | 4 Brenner | | |
| Heiz-02 | 10 - 25 | 0,5 | 2,0 | 0,015 | 2,5 |
| | 230 - 300 | 1,1 | 4,4 | 0,015 | 7,0 |
| Schneid-02 | 10 - 25 | 3,5 | 14,0 | 0,05 | 6,5 |
| | 230 - 300 | 33 | 132 | 0,3 | 7,5 |
| Brenngas | 10 - 25 | 0,4 | 1,6 | 0,01 | 0,16 |
| | 230 - 300 | 0,9 | 3,6 | 0,01 | 0,36 |

Die rechnergesteuerte elektronische Einstellung der Gase ermöglicht auch bei großer Durchflußmengenänderung einen bisher nicht erreichten konstanten Betriebsdruck. Durch die rechnergesteuerte elektronische Regelung und den automatischen Programmablauf werden kurze Anheizzeiten, gleichförmige Wärmepunkte, eine hohe Gleichmäßigkeit beim Lochstechen und saubere Brennschnitte erzielt.

Beim Lochstechvorgang wurde gefunden, daß die Werte für den Druckanstieg des Schneidsauerstoffes auf einer Hyperbel -oder Parabel-Funktion angeordnet sein müssen, damit eine hohe Funktionssicherheit mit nur geringen Düsenbelastungen gewährleistet ist. Dabei kann der Druckanstieg kontinuierlich und/oder, vorzugsweise diskontinuierlich erfolgen.

Untersuchungen haben ergeben, daß rechnergesteuerte zeitabhängige Spannungs- (Druck)/Zeit-Kurven für Materialdicken von 10 bis 150 mm beim Lochstechen zu guten Ergebnissen führen.

Nach dem Positionieren der Brenner übernimmt mit dem Anheizen ein Rechner die weitere Steuerung.

Vorteilhaft können hierbei von einer Steuerung alle Schneidbrenner über ein ausgegebenes Signal angesteuert werden, weil die Ansteuersignale absolut und nicht prozeßabhangig in der Steuerung abgelegt sind.

Vorteilhaft können bei dieser Steuerung bzw. Regelung der Gase und justierten Brennern die Einstellventile an den Maschinenschneidbrennern und die Steuerregler und Magnetventile der elektromagnetischen Zentralschaltung entfallen. Fehler bei dieser Druckeinstellung durch das Bedienungspersonal werden hierdurch vermindert.

Mit der Steuerung bzw. Regelung der Gase ist es weiterhin vorteilhaft möglich, für vorgegebene Schneidaufgaben (Heizen, Anschneiden oder Lochstechen und Brennschneiden) unabhängig von der Anzahl der Schneidbrenner die gespeicherten Betriebsdaten von einer Diskette abzurufen und die Regelung der Gase einerseits von einem Rechner zu steuern oder andererseits manuell über Sollwertgeber vorzunehmen.

Durch die im Anspruch 6 der Erfindung beschriebene Brenngasentlüftung wird ein Entweichen von unverbrannten Brenngasen in den Arbeitsraum verhindert. Geruchsbelästigungen und Explosionen können hierdurch nicht auftreten.

Ein Ausführungsbeispiel der Erfindung ist in der Zeichnung dargestellt und wird im folgenden näher beschrieben.

Es zeigen

Fig. 1 eine Schemazeichnung über den Aufbau und die Schaltung der Steuerung bzw. Regelung der Gase von Schnied-, Heizsauerstoff und Brenngas mit zwei justierten Maschinenschneidbrennern;

Fig. 2 eine Teilschnittzeichnung eines Proportional-Druckventiles;

Fig. 3 eine Tabelle der Betriebsdaten für Brennschneiddüsen bei der Verwendung des Brenngases Acetylen mit Angabe der Spannungs- und Druckwerte beim Brennschneiden;

3

Fig. 4 eine Tabelle der Betriebsdaten zum Lochstechen bei der Verwendung des Brenngases Acetylen mit Angabe der Einschaltzeiten bei manueller Sollwerteingabe;

Fig. 5 ein Ablaufdiagramm eines rechnergesteuerten Lochstechvorganges bei einer Werkstückdicke von 20 mm mit einer Brennschneiddüse 10 bis 25 mm.

Fig. 6 ein Ablaufdiagramm eines rechnergesteuerten Lochstechvorganges bei einer Werkstückdicke von 130 mm mit einer Brennschneiddüse 100 bis 150 mm.

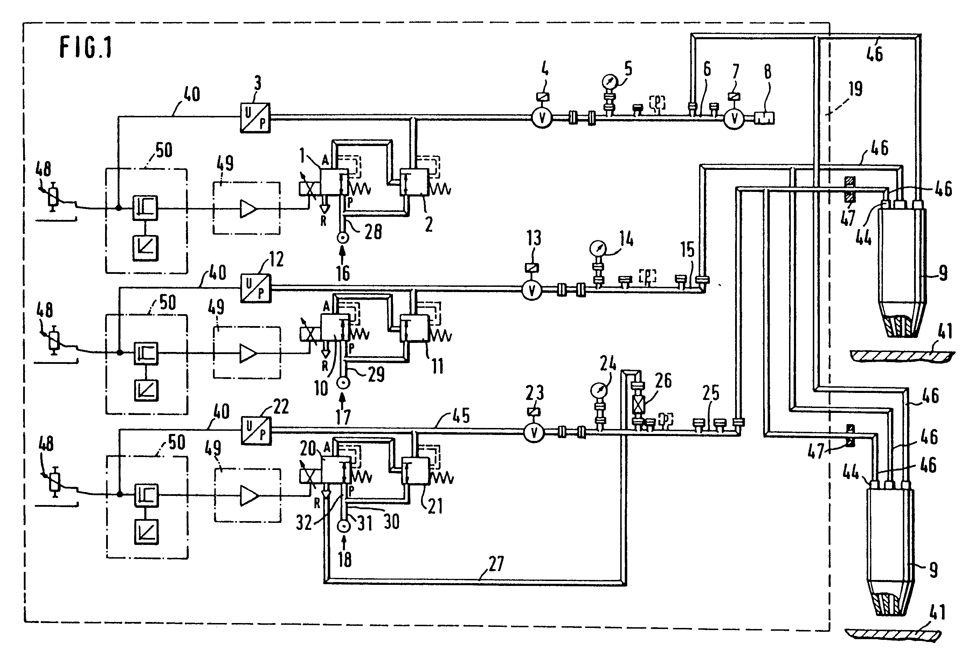

Die in der Fig. 1 dargestellte Gasmengensteuerung bzw. -regelung 19 ist an einer (nicht dargestellten) Brennschneidmaschine angeordnet. Von einer nicht näher dargestellten Gasversorgungsquelle werden die Maschinenschneidbrenner 9 mit Schneidsauerstoff (Pfeilrichtung 16), Heizsauerstoff (Pfeilrichtung 17), und Brenngas (Pfeilrichtung 18) versorgt. Die Gasmengensteuerung bzw. -regelung 19 besteht im wesentlichen aus einer Schneidsauerstofflinie 28, einer Heizsauerstofflinie 29 und einer Brenngaslinie 30.

Im folgenden wird der Aufbau der Brenngaslinie 30 beschrieben. Der Aufbau und die Bauelemente dieser Linie sind gleichartig mit der Heizsauerstofflinie 29 und der Schneidsauerstofflinie 28. Abweichungen innerhalb der Linien 28, 29, 30, wie das in der Schneidsauerstofflinie 28 angeordnete Magnetventil 7 und der Schalldämpfer 8 betreffen nur die Entlüftung.

Die Bezugsziffern der den Bauelementen der Brenngaslinie 30 entsprechenden Bauelemente der Heizsauerstofflinie 29 und der Schneidsauerstofflinie 28 werden in Klammern der folgenden Beschreibung der Brenngaslinie 30 hinzugefügt.

Von einem nicht dargestellten Behälter wird das Brenngas in Pfeilrichtung 18 durch eine Hauptleitung 31 zu dem Maschinenbrenner 9 geführt. Von dieser Hauptleitung 31 zweigt eine Leitung 32 ab. Hinter dieser Abzweigstelle ist in der Hauptleitung 31 ein pneumatisch regelbarer Druckminderer 21 (2, 11) angeordnet, der den Minimal-Maximaldurchflußmengen seiner Verbraucher d.h. den Maschinenschneidbrennern 9, entspricht. Dieser pneumatisch regelbare Druckminderer 21 wird von einem in der Leitung 32 angeordneten Proportional-Druckventil 20 (1, 10) gesteuert und von einem Druckaufnehmer 22 (3, 12) überwacht.

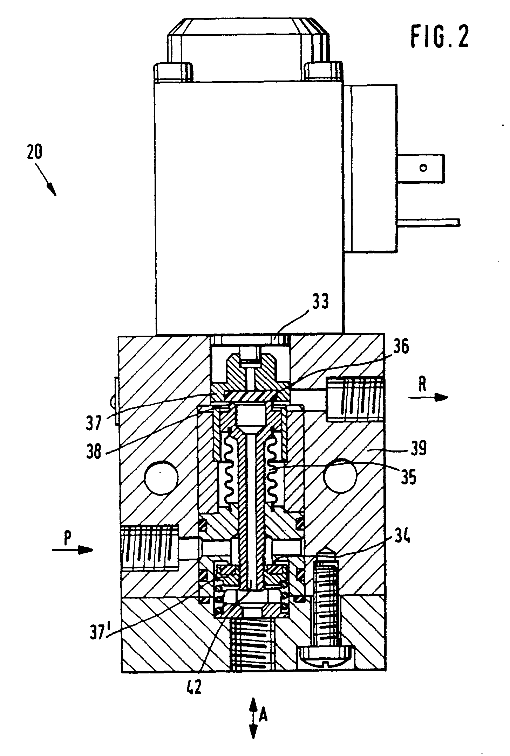

Bei dem in Fig. 2 dargestellten Proportional-Druckventil 20 handelt es sich um ein Drei-Zwei-Wegesitzventil mit Sekundärentlüftung, das mittels eines Proportionalmagneten 33 geregelt wird. Das Proportional-Druckventil 20 ist mit seiner Sekundärdruckseite A mit dem Druckminderer 21 und mit seiner Primärdruckseite P an die Leitung 32 angeschlossen. Die wirksame Sitzfläche 34 des Proportionalventiles 20 ist gleich der wirksamen Fläche des Faltenbalges 35. Weiterhin entspricht die Sitzfläche 36 diesen beiden Flächen 34 und 35.

Das Proportional-Druckventil 20 funktioniert durch einen Vergleich von Kräften.

Eingangseitig ist das die elektrisch voreingestellte Kraft des Proportionalmagneten 33. Ausgangsseitig ist die aus dem Sekundärdruck und der Sitzfläche 36 resultierende Gegenkraft. Sind diese Kräfte ausgeglichen, sind alle Ventilsitze geschlossen; der Sekundärdruck ist sowohl gegenüber dem Primärdruck als auch gegenüber der Entlüftung abgesperrt.

Wird ein höherer Sekundärdruck gewünscht, so wird die kraft des Proportionalmagneten 33 erhöht. Das System ist dadurch zunächst nicht mehr im Gleichgewicht. Die Ventilteller 37 und 37' bewegen sich nach unten, bis der obere (bei max. Magnetkraft) auf dem Bund 38 des Gehäuses 39 aufliegt. Durch diese Bewegung wird der untere Ventilteller 37' mit seiner Sitzfläche 34 abgehoben.

Von der Primärseite P strömt solange Medium zur Sekundär seite A, bis der über den Proportionalmagnet 33 vorgegebene Sekundärdruck erreicht ist. Dadurch sind die Kräfte wieder ausgeglichen. Das Proportional-Druckventil 20 schließt, wie bereits beschrieben, alle Ventilsitze.

Ein niedriger Sekundärdruck entsteht bei Verringerung der Magnetkraft. Durch die unausgeglichene Kräftebilanz entfernt sich der obere Ventilteller 37 von der Sitzfläche 36. Der Sekundärdruck kann über die Bohrung 42 den Ringspalt zwischen Sitzfläche 36 und Bund 38 solange entlüften, bis die Kräftebilanz ausgeglichen ist. Nach dem Erreichen des vorgegebenen Sekundärdrucks schließt das Proportional-Druckventil alle Ventilsitze.

Die Proportional-Druckventile 1, 10 und 20 sind für drei Druckstufen ausgelegt, denen folgende Betriebsdrücke zugeordnet sind:

für Schneidsauerstoff:  Druckbereich 0—16 bar,
für Heizsauerstoff:      Druckbereich 0—10 bar,
für Brenngas:           Druckbereich 0— 2 bar.

Hinter dem Druckminderer 21 ist in der Brenngaslinie 30 der Druckaufnehmer 22 (3, 12) in der Hinterdruckleitung 45 angeordnet, der in der Hinterdruckleitung 45 den eingestellten Arbeitsdruck überwacht und diesen gegebenenfalls nachregelt. Hierzu ist der Druckaufnehmer 22, der das Drucksignal in ein elektrisches Signal umformt, über die Leitung 40 mit einem elektrischen Regler 50 verbunden, der über einen Verstärker 49 auf den Proportionalmagneten 33 wirkt.

Das in der Hinterdruckleitung 45 nach dem Druckaufnehmer 22 angeordnete Magnetventil 23 (4, 13) dient dem gasdichten Absperren der Durchflußmenge. Es befindet sich unmittelbar vor dem Verteiler 25 (6, 15). Gasschläuche bzw. -leitungen 46 verbinden den Verteiler 25 mit den Maschinenschneidbrennern 9.

Werden die Betriebsdaten für Brennschneiddüsen mittels der elektronischen Gasmengensteuerung bzw. -regelung 19 eingestellt und geregelt, sind die Maschinenschneidbrenner 9 justiert. Hierzu ist vorzugsweise in dem Brenneranschluß 44 der Brenngaslinie 30 oder vor dem Maschinenbrenner 9 eine Blende 47 (vergrößert im Gasschlauch 46 für Brenngas dargestellt) angeordnet, mit der eine definierte Durchflußmenge des Brenngases gewährleistet ist. Die nicht näher dargestellten Druckdüsenbohrungen des Maschinenschneidbrenners 9 sind kalibriert und brenngasseitig ist ein nicht näher dargestelltes Einstellventil zum Abgleich von Differenzwerten angeordnet.

Der Überwachungsmanometer 24 (5, 14) an der Bedienungstafel der nicht näher dargestellten Brennschneidmaschine zeigt den Druck im Verteiler 25, der bei richtig dimensionierten Gasschläuchen bzw. -leitungen 46 identisch ist mit dem Druck an den Maschenschneidbrennern 9. Zwischen dem Verteiler 25 und dem Überwachungsmanometer 24 ist die Hauptleitung 31 über eine Sekundär-Entlüftungsleitung 27 mit der Entlüftungsseite R des Proportional-Druckventiles 20 verbunden. In der Sekundär-Entlüftungsleitung 27 ist vor dem Brenngasverteiler 25 ein Rückströmventil 26 angeordnet, das einen Druckausgleich zwischen dem Arbeitsdruck im Verteiler 25 und dem Steuerdruck am Proportional-Druckventil 20 verhindert.

Vorteilhaft kann durch den Austausch des Überwachungsmanometers 24 gegen ein Kontaktmanometer erreicht werden, daß beim Unterschreiten eines Brenngasmindestdruckes die Maschine nicht mehr betrieben werden kann. Diese Maßnahmen vermeiden Bedienungsfehler und erhöhen die Betriebsbereitschaft.

In der fig. 1 wird das Proportional-Druckventil 20 als Steuerventil für den Druckminderer 21 (2, 11) eingesetzt. Wird der Proportionalmagnet 33 angesteuert, fließt so lange Gas von der Primär- P zur Sekundärseite A des Proportional-Druckventils 20 in den Steuerraum des Druckminderers 21, bis die vorgegebene Magnetkraft den sich aufbauenden Gegendruck ausgleicht. Der jetzt vor dem Magnetventil 23 anstehende Hinterdruck wird bei geöffnetem Magnetventil 23 in den Verteiler 25 eingespeist. Die am Verteiler 25 angeschlossenen Gasschläuche bzw. -leitungen 46 führen das Gas zu den Maschinenschneidbrennern 9.

Selbstverständlich ist es bei entsprechender Auslegung des Proportional-Druckventils 20 (1, 10) auch möglich, das Proportional-Druckventil in der Hauptleitung 31 anzuordnen, so daß der Druckminderer 21 entfallen kann.

Das Zu- und Abschalten einzelner Maschinenbrenner 9, Zünden der Flamme und die Sollwerteinstellung für manuelle Bedienung zum Einstellen der Betriebsdrücke nach Manometeranzeige oder nach Skalenangabe am Potentiometer sowie die Umschaltung von Handeingabe auf Rechnersteuerung erfolgt vorzugsweise von der Bedienungstafel der Brennschneidmaschine aus.

Das Maß für die Gasdurchflußmenge wird durch Änderung der Magnetkraft am Proportional-Druckventil 20 eingestellt. Dazu wird der Hub durch einen elektrischen Sollwert als Spannungssignal vorgegeben. Die Einstellung des elektrischen Sollwertes bzw. der elektrischen Sollwertspannung kann dabei wahlweise an einem Potentiometer 48 von Hand oder über einen nicht näher dargestellten Rechner erfolgen.

Die Sollwerte für die unterschiedlichen Brennschneiddüsen und Brenngase sowie die unterschiedlichen Arbeitsphasen, wie Anheizen, Anschneiden, Lochstechen, Brennschneiden sind in Brennschneidtabellen aufgeführt.

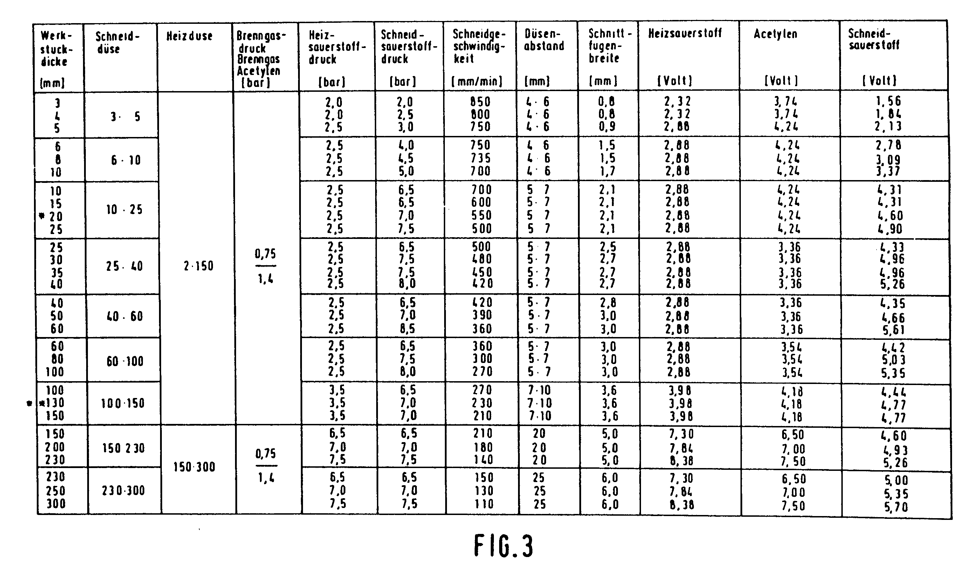

In Fig. 3 ist eine Tabelle der Betriebsdaten für Brennschneiddüsen bei der Verwendung des Brenngases Acetylen aufgelistet, wobei die den Druckwerten entsprechenden Spannungswerte beim Brennschneiden von Werkstücken 41 mit einer Dicke von 20 mm mit einem * und mit einer Dicke von 130 mm mit zwei ** versehen sind. Die Tabelle gibt Richtwerte für unlegierten Stahl bis 0,3% Kohlenstoff und bei Verwendung von Sauerstoff mit mindestens 99,5% Reinheit.

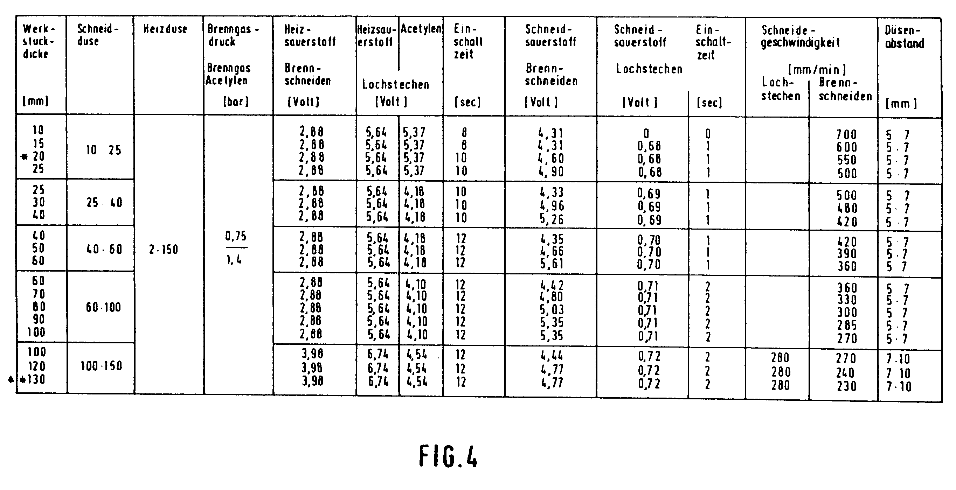

In Fig. 4 ist eine Tabelle der Betriebsdaten zum Lochstechen bei der Verwendung des Brenngases Acetylen aufgelistet. Die in der Tabelle angegebenen Einschaltzeiten beim Lochstechen betreffen die manuelle Einstellung der Durchflußmengen nach Skalenteilung am Sollwertgeber 48, wobei die Spannungswerte beim Lochstechen von Werkstücken 41 mit einer Dicke von 20 mm mit einem * und mit einer Dicke von 130 mm mit zwei ** versehen sind. Die in der Fig. 4 mit einem * oder zwei ** gekennzeichneten Spannungswerte zum Brennschneiden der Werkstücke 41 stimmen mit den in Fig. 3 genannten Werten überein. Wie aus der Fig. 4 ersichtlich, ist bei der manuellen Sollwerteinstellung beim Lochstechen nur eine einmalige Druckerhöhung (vom Druck beim Lochstechen auf den Druck beim Brennschneiden) des Schneidsauerstoffs möglich.

Die in solchen Brennschneidtabellen aufgeführten Sollwertspannungen für die unterschiedlichen Brennschneiddüssen und Brenngase werden vorzugsweise von einem Rechner auf die Eingangsseite eines Verstärkers 49 übertragen. Proportional zu Eingangsspannung erhält man am Verstärkerausgang einen Steuerstrom für den Proportionalmagneten 33. Ein zwischen Rechner oder Potentiometer 48 und Verstärker 49 angeordneter elektischer PID-Regler 50 (Netzwerk mit proportionalem, integralem, differenzierendem Übertragungsverhalten) dient zum Stabilisieren des Regelsystems bei unterschiedlichen Mengenverhältnissen, aber geforderter Druckkonstanz. Der in die Hinterdruckleitung 45 eingebaute Druckaufnehmer 22 gibt ein Druck-Ist-Wert-Signal zum PID-Regler 50. Dort wird das Druck-Ist-Wert-Signal zum Soll-Ist-Wert-Vergleich verwendet. Bei Abweichung gibt der PID-Regler 50 die entsprechende Stellgröße an den Proportionalmagneten 33 des Proportional-Druckventils 20 aus. Für Heizsauerstoff wird zur Verstärkung das Proportionalverhalten, für Schneidsauerstoff und Brenngas das Proportional-Integralverhalten unterstützt.

Von der Primärdruckseite P strömt somit solange Sauerstoff oder Brenngas auf die Sekundärdruckseite A, bis der über den Proportionalmagneten 33 vorgegebene Steuerdruck erreicht ist. Dadurch sind die Kräfte wieder ausgeglichen und das Proportional-Druckventil schließt.

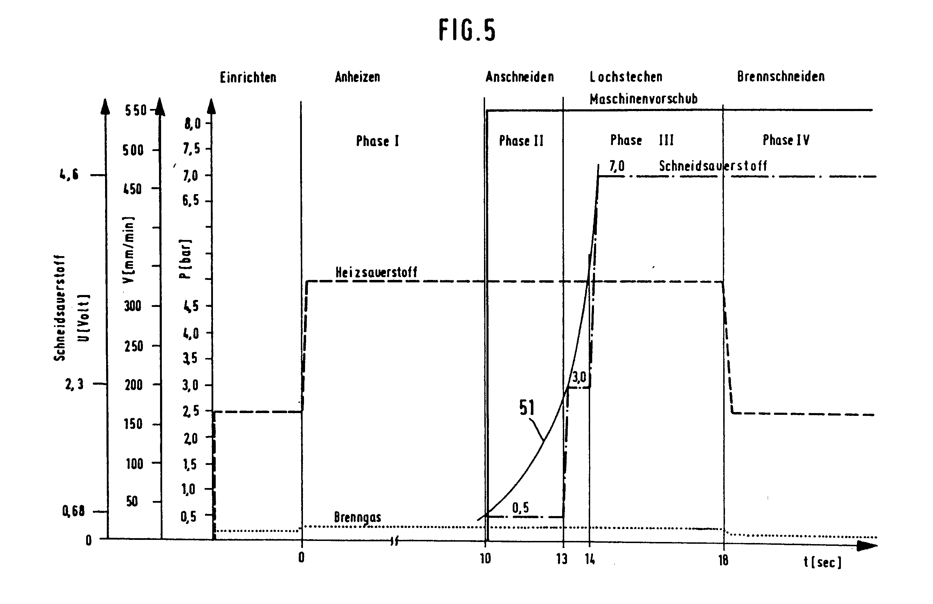

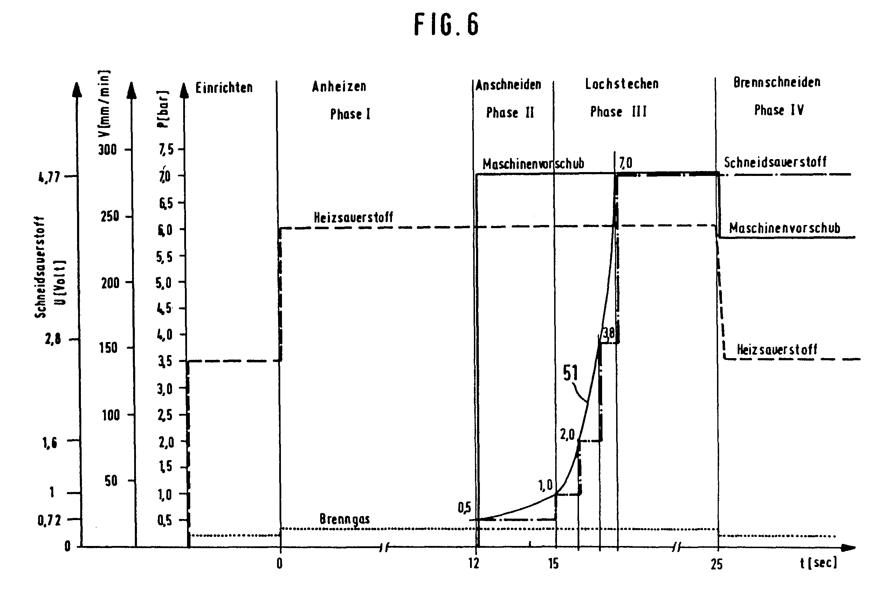

Vorzugsweise wird für den gesamten Funktionsablauf vom Anheizen (Phase I, Fig. 5 und 6) bis zum Brennschneiden (Phase IV, Fig. 5 und 6) ein Steuerprogramm erstellt. Das Steuerprogramm wird auf Unterprogramme aufgeteilt, wobei das erste Programm die Eingabe und Korrektur der Parameterwerte (Sollwerte für Gase, Haltezeiten) in den Rechner und das Abspeichern in Form einer relativen Datei auf der Datendiskette gestaltet.

Das zweite Programm übernimmt die Führung des Schneidprozesses. Das Programm ist in "Menü-Technik" aufgebaut und leistet folgendes:

Zunächst erfolgt die Abfrage, ob die Eingabe aller Parameterwerte von Hand über die Tastatur des Rechners oder durch Einlesen von der Datendiskette erfolgen soll. Wird der Handeingabemodus gewählt, so erscheinen nacheinander die Parameternormen und deren letzte Werte auf dem Bildschirm. Die gewünschten Zahlenwerte können jeweils eingegeben, bzw. die alten Werte können übernommen werden.

Bei Einlesen der Parameter von Diskette sind zuerst die Suchkriterien (Düsentyp, Werkstückdicke, Düsengröße) nacheinander einzugeben. Danach werden alle Werte von der Datendiskette gelesen und auf dem Bildschirm angezeigt.

Gleichzeitig erscheint auf dem Bildschirm das nächste Menü, in dem ausgewählt werden muß, wie der Schneidsauerstoffanstieg beim Lochstechen (Fig. 5 von Phase II nach Phase III oder Fig. 6 von Phase II nach Phase III erfolgen soll. Hierbei stehen die Möglichkeiten den Schneidsauerstoffanstieg zweistufig oder entsprechend einer Funktion, wie sie beim Durchdringen einer Ebene mit einem Kreiskegel (Elipse, Hyperbel oder Parabel) entsteht, vorzugsweise nach einer Hyperbelfunktion zu steuern. Hierbei können die Funktionswerte kontinuierlich und/oder abgestuft auf der Hyperbel 51 angeorgnet sein.

Wird die Schneidsauerstoffmenge entsprechend einer Hyperbelfunktion gewählt, so sind als nächstes die Zeitdauer des Anstiegs und die Anzahl der Stufen entsprechend Fig. 5 oder Fig. 6 einzugeben. Ist dies geschehen, bzw. wurde die zweistufige Steuerung gewählt, so folgt das nächste Menü.

Hier kann zwischen folgenden Punkten gewählt werden:

a) Brenngas und Heizsauerstoff der Maschinenschneidbrenner 9 einschalten

b) Rückkehr zum Programmbeginn, (Abfrage des Eingabemodus), wenn mit anderen Werten gearbeitet werden soll

c) Ausgabe der Werte über den Drucker, nach Beendigung der Ausgabe springt das Programm wieder zum Beginn dieses Menüs.

Nach Wahl von Variante a) besteht die Möglichkeit den Schneidsauerstoff zuzuschalten.

Sind die Flammen gezündet, fragt der Rechner ab, ob das Brennschneiden mit oder ohne Lochstechen durchgeführt werden soll. Wird nach Eingabe der Antwort hierauf dem Computer per Tastendruck mitgeteilt, daß die Anfangsposition des Schneidvorganges erreicht ist, so beginnt das Brennschneiden gemäß einem Ablaufdiagramm mit den Sollwerten rechnergesteuert.

Beim Lochstechen besteht die Möglichkeit, die Anheizphase durch Betätigen einer bestimmten Taste zu verlängern oder abzubrechen, um so verschiedene Oberflächenbeschaffenheiten der Werkstücke Rechnung zu tragen. Die aktuelle Anheizzeit wird dabei ständig angezeigt, ebenso wie jeweils die einzelnen Phasen I bis IV (Fig. 5 oder 6 des Schneidvorganges.

Ist das Schneiden beendet, so können die Gase vom Rechner aus abgeschaltet werden. Dies ist ebenfalls während des gesamten Ablaufes jederzeit möglich.

Nach Beendigung des Brennschneidvorganges erscheint auf dem Bildschirm das nächste Menü, in dem ausgewählt wird, ob der folgende Programmablauf mit denselben oder anderen Parameter-Werten erfolgen soll.

Die Einleitung des Schneidvorganges erfolgt auf folgende Weise:

An der Bedienungstafel wird der Programmwahlschalter von Hand- auf Automatik-Steuerung umgeschaltet. Die Steuergrößen nach Betriebstabellen, wie sie in Fig. 3 und 4 für die manuelle Sollwerteingabe aufgelistet sind, sind in das Programm einzugegen und auf Diskette zu speichern. Hierbei sind in Fig. 3 und 4 lediglich Betriebsdaten bei der Verwendung des Brenngases Acetylen dargestellt. Selbstverständlich ist es auch möglich, die Betriebsdaten für andere Brenngase, beispielsweise Propan, in das Programm einzugeben und auf Diskette zu speichern. In die Steuerung ist der Maschinenvorschub (als durchgezogene Linie in den Figuren 5 und 6 dargestellt) einbezogen, um einen vollautomatischen Programmablauf zu gewährleisten. Das Rechnerprogramm ermöglicht den Beginn des Brennschnittes an der Werkstückkante oder innerhalb des Werkstückes. Untersuchungen haben ergeben, daß rechnergesteuerte zeitabhängige Spannungs- (Druck)/Zeit-Kurven für Materialdicken von 10 bis 150 mm bei folgender Werkstückdickeneinteilung beim Lochstechen zu befriedigenden Ergebnissen führen:

a) Werkstückdicken von 3 bis 80 mm nach Fig. 6 mit einer Mitteldruckstufe mit $Pm \approx (P_E - P_o)/2$, wobei mit $P_E$ der Enddruck und mit $P_o$ der Anfangsdruck bezeichnet wird.

b) Werkstückdicken von 80 bis 150 mm nach fig. 7 mit drei Zwischenstufen nach der Funktion $U_{p(t)} = (\Delta Up/tg^3) \cdot t^3 + Ppo$ bei Druckstufen von $P_y = 2 \cdot \Delta P$ mit einem Anfangsdruck $Po = 0,5$ bar.

Als veränderliche Größen werden die Einwirkzeit für den Anfangsdruck $P_o$ bzw. für die Anfangsspannung $U_{po}$, die Anzahl und Verteilung der Spannungsstufen (entspricht den Druckstufen) nach der Steuerfunktion $U_{p(t)} = (\Delta Up/tg^3) \cdot t^3 + U_{po}$ eingestellt.

EP 0 188 763 B1

Nach dem Positionieren der Brenner 9 übernimmt mit dem Anheizen (Phase I der Fig. 5 oder Fig. 6) der Rechner die weitere Steuerung. Die Programmschritte werden auf dem Monitor angezeigt.

Der Rechner fragt vier Eingaben ab:

Programmname, Werkstückdicke, Düsentyp (z.B die von der Anmelderin unter dem Namen Vadura 1215-A vertriebene Düse) und Düsengröße.

Nach Eingabe der Suchparameter erfolgt die Öffnung der Datei auf der Diskette. Der Datensatz wird gelesen und auf dem Bildschirm ausgegeben. Mit einer Taste wird das Programme gestartet. Magnetventil 23 der Brenngaslinie 30 und Magnetventil 13 der Heizsauerstofflinie 29 werden geöffnet und das Brenngas-Sauerstoffgemisch wird extern durch Zündbrenner gezündet. Die Zeitdauer der Anheizphase beträgt für Werkstücke 41 mit einem * nach Fig. 5 10 Sekunden und für Werkstücke 41 mit zwei ** nach Fig. 6 12 Sekunden. Durch Drücken einer Taste kann die Phase I verlängert oder abgebrochen werden. Ein-/ Ausschalter auf der Maschinenbedienungstafel und die Magnetventile 4, 13, 23 (Fig. 1) am Brennereingang erlauben das wahlweise Zu- oder Abschalten einzelner Maschinenbrenner 9. Nach der Anheizphase I erfolgt die Anschneidphase (Phase II der Fig. 5 und Fig. 6). Hier wird das Magnetventil 4 der Schneidsauerstofflinie 28 entsprechend den unter a) oder b) genannten Funktionen geöffnet. Gleichzeitig wird der Maschinenvorschub eingeschaltet. Mit dem Öffnen des Magnetventils 4 steht schlagartig an den Brenneranschlüssen Schneidsauerstoff (als Strich-Punkt-Punkt-Strichlinie in Fig. 5 bzw. Fig. 6 dargestellt) mit einem Druck von 0,5 bar (entspricht 0,68 Volt bei * und 0,72 Volt bei **) an. Bei diesem Druck ist der Schneidstrahl besonders gebündelt, und es entsteht eine schmale Schnittfuge, die zunehmend tiefer in das Material eindringt. Ist so eine Schnittfuge entstanden, wird das Proportional-Druckventil 1 während des Lochstechens (Phase III der Fig. 5 bzw. Fig. 6) entsprechend den Funktionen a) bei Werkstückdicken von 3—80 mm (Fig. 5) oder entsprechend Funktion b) für Werkstückdicken von 80—150 mm (Fig. 6) geöffnet, bis am Maschinenbrenner 9 die Tabellenwerte für das Brennschneiden erreicht sind. Am Anfang der Phase IV wird der Maschinenvorschub und der Heizsauerstoff (in Fig. 5 bzw. Fig. 6) strichliniert dargestellt) sowie das Brenngas (in Fig. 5 bzw. Fig. 6) punktiert dargestellt) auf die in Fig. 5 und Fig. 6 genannten Werte vermindert.

Für die Untersuchung auf Druckkonstanz bei kleiner und großer Mengenänderung mit allen Düsengrößen von 3 bis 300 mm ausgehend von zuerst Vier Brennern und nacheinander abschalten bis auf einen Brenner mit anschließenden Zuschalten bis auf vier Brenner werden für alle drei Linien am Brennereingang und am Verteiler 6, 15, 25 die Drücke gemessen. Die Manometer am Verteiler und am Brenner zeigen den gleichen Druck an.

Die Durchflußmengenänderungen von 4 × Q auf Q und von Q auf 4 × Q ergeben die nachfolgenden Druckabweichungen $\Delta p$ vom Ist-Wert.

| | Düsen-größe | Durchflußmenge $m^3/h$ | | Druckdiffer. (bar) | Betriebs-druck (bar) |
|---|---|---|---|---|---|
| | | 1 Brenner | 4 Brenner | | |
| Heiz-$O_2$ | 10 - 25 | 0,5 | 2,0 | 0,015 | 2,5 |
| | 230 -300 | 1,1 | 4,4 | 0,015 | 7,0 |
| Schneid-$O_2$ | 10 - 25 | 3,5 | 14,0 | 0,05 | 6,5 |
| | 230 -300 | 33 | 132 | 0,3 | 7,5 |
| Brenngas | 10 - 25 | 0,4 | 1,6 | 0,01 | 0,16 |
| | 230 -300 | 0,9 | 3,6 | 0,01 | 0,36 |

Durch Druckaufnehmer und PID-Regelkarte wird die Hysterese ausgeschaltet, die reproduzierbare Regelgenauigkeit ist gegeben. Diese Art der Gasmengenregelung ist selbstverständlich für den Anschluß beliebig vieler Brenner sowie für andere Prozeßsteuerungen geeignet, wie z.B. Autogen-, Lichtbogen-, Plasma-, Laser- Gasmischeinrichtungen, Brenner für Öfen, insbesondere Glüh- und Schmelzöfen.

**Patentansprüche**

1. Verfahren zum Brennschneiden, Wärmen, Flämmen oder Schweißen von Werkstücken mit zumindest einem Brenner (9), der eine Brenngas/Sauerstoff- oder Luftflamme und/oder einen Sauerstoffstrahl liefert, deren Gaszusammensetzung durch die Ansteuerung von Proportionalventilen (1, 10, 20) mittels elektrischer Signale von einer Steuereinheit verändert werden kann, dadurch gekennzeichnet, daß für jedes zu bearbeitende Material (41) die elektrischen Signale in Abhängigkeit von der

7

# EP 0 188 763 B1

Werkstückdicke, dem Brenngas, der Düsengröße, dem Düsentyp, der Arbeitsphase und/oder dem Brennerabstand erstellt und in die Steuerung eingegeben werden, die Steuerung in Abhängigkeit der elektrischen Signale über eine zeitgerechte Einstellung der Magnetkraft der Proportionalventile (1, 10, 20) den durch die Proportionalventile vorgegebenen Druck der Gase einstellt, wobei über diesen Druck und die in Abhängigkeit davon durch die Proportionalventile (1, 10, 20) strömenden Gasmengen, die zwischen Gasversorgungsquellen und dem Brenner (9) angeordneten Druckminderer (2, 11, 21) geregelt werden.

2. Verfahren nach Anspruch 1, dadurch gekennzeichnet, daß der elektrische Sollwert als Spannungs- oder Stromwert von einer NC-Steuerung vorgegeben wird.

3. Verfahren zum Brennschneiden von Werkstücken mit zumindest einem Brenner (9), der eine Brenngas/Sauerstoffflamme und einen Sauerstoffstrahl liefert, deren Gaszusammensetzung durch die Ansteuerung von Proportionalventilen mittels elektrischer Signale von einer Steuereinheit verändert werden kann, nach einem der Ansprüche 1 oder 2 dadurch gekennzeichnet, daß zum Lochstechen das Proportional-Druckventil (1) für den Schneidsauerstoff mittels elektrischer Signale so angesteuert wird, daß die Werte für den Schneidsauerstoffdruckanstieg auf einer Funktion angeordnet sind, wie sie bei der Durchdringung einer Ebene mit einem Kreiskegel entsteht.

4. Verfahren nach Anspruch 3, dadurch gekennzeichnet, daß die Funktion eine Hyperbel oder Parabel ist.

5. Einrichtung zum Steuern von Brenngas und Sauerstoff oder Luft, mit einem Schneid-, Schweiß-, Wärm- oder Flämmbrenner (9) für die thermische Bearbeitung von Werkstücken (41) der über Leitungen (28, 29, 31, 32, 45, 46) an Gasversorgungsquellen angeschlossen ist und mit Proportionalventilen (1, 10, 20), die in den Leitungen (28, 29, 31, 32, 45, 46) angeordnet und mittels elektrischer Signale von einer Steuerung steuerbar sind, dadurch gekennzeichnet, daß die Proportionalventile als Druckventile (1, 10, 20) ausgebildet und mit regelbaren Durckminderen (2, 11, 21) verbunden sind, die von den Proportional-Druckventilen (1, 10, 20) steuerbar sind.

6. Einrichtung nach Anspruch 5, dadurch gekennzeichnet, daß die Brenner (9) justiert sind.

7. Einrichtung nach Anspruch 5 oder 6, dadurch gekennzeichnet, daß das in der Brenngasleitung angeordnete Proportional-Druckventil (20) mit seiner Sekundärdruckseite A mit der Hinterdruckleitung (45) der Brenngasleitung (31) verbunden ist und dessen Entlüftungsseite R über eine Sekundär-Entlüftungsleitung (27) und ein Rückströmventil (26) mit der Brenngasleitung (31, 45) verbunden ist.

8. Einrichtung nach einem der Ansprüche 5 bis 7, dadurch gekennzeichnet, daß das Proportional-Druckventil (20) einen elektrische ansteuerbaren Proportionalmagneten aufweist, der bei Verringerung der Magnetkraft eine Verbindung zwischen der Sekundärdruckseite A und der Entlüftungsseite R freigibt und Brenngas über die Sekundär-Entlüftungsleitung (27) und das Rückströmventil (26) zu der Brenngasleitung (31, 45) strömt.

9. Einrichtung nach einem der Ansprüche 5 bis 8, dadurch gekennzeichnet, daß in der Hinterdruckleitung (45) des Proportional-Druckventiles (20) ein Druckaufnehmer (22) zum Überwachen des Arbeitsdruckes angeordnet ist.

## Revendications

1. Procédé d'oxycoupage, de chauffage, de flammage ou de soudage de pièces avec au moins un chalumeau (9) qui fournit un jet de gas combustible/oxygène ou d'une flamme à l'air et/ou un jet d'oxygène et dont la composition de gaz peut être modifiée par la commande de vannes de proportionnalité (1, 10, 20) à l'aide de signaux électriques fournis par une unité de commande, procédé caractérisé en ce que pour chaque matériau (41) à travailler, on établit les signaux électriques (41) à travailler, on établit les signaux électriques en fonction de l'épaisseur de la pièce, du gaz combustible, de la dimension et du type des buses, de la phase de travail et/ou de l'écartement du chalumeau et on introduit ces paramètres dans la commande, cette commande réglant en fonction des signaux électriques et par un réglage dans le temps de la force de l'aimant des vannes de proportionnalité (1, 10, 20), la pression des gaz prédéterminée par les vannes de proportionnalité, et les quantités de gaz traversant les vannes de proportionnalité (1, 10, 20) sous cette pression et en fonction de celle-ci, sont réglées par des réducteurs de pression (2, 11, 21) montés entre les sources d'alimentation en gaz et le chalumeau (9).

2. Procédé selon la revendication 1, caractérisé en ce que la grandeur électrique de consigne est une grandeur de tension ou d'intensité fournie par une commande numérique.

3. Procédé d'oxycoupage de pièces avec au moins un chalumeau (9) qui fournit une flamme de gaz combustible/oxygène et un jet d'oxygène et dont la composition de gaz peut être modifiée par la commande de vannes proportionnelles à l'aide de signaux électriques à partir d'une unité de commande, selon l'une des revendications 1 ou 2, caractérisé en ce que pour percer des trous, la vanne de pression proportionnelle (1) pour l'oxygène de découpage est commandée à l'aide de signaux électriques pour que les paramètres de la montée en pression de l'oxygène de découpage résultent d'une fonction correspondant à l'intersection d'un plan et d'un cône de révolution.

4. Procédé selon la revendication 3, caractérisé en ce que la fonction est une hyperbole ou une parabole.

5. Installation pour commander le gaz combustible et l'oxygène ou l'air avec un chalumeau d'oxycoupage, de soudage, de chauffage ou de flammage (9) pour le travail thermique de pièces (41) par

8

les conduites (28, 29, 31, 32, 45, 46) reliées à des sources d'alimentation en gaz et comportant des vannes de proportionnalité (1, 10, 20) associées aux conduites (28, 29, 31, 32, 45, 46) et commandées par la commande à l'aide de signaux électriques, installation caractérisée en ce que les vannes de proportionnalité sont des vannes de pression (1, 10, 20) reliées à des réducteurs de pression (2, 11, 21) réglables commandés par des vannes de pression de proportionnalité (1, 10, 20).

6. Installation selon la revendication 5, caractérisée en ce que les chalumeaux (9) sont ajustables.

7. Installation selon la revendication 5 ou 6, caractérisée en ce que la vanne de pression de proportionnalité (20) montée dans la conduite de gaz combustible est reliée par son côté de pression secondaire (A) à la conduite de pression secondaire (45) de la conduite de gaz combustible (31) et son côté d'évacuation d'air (R) est reliée par une conduite d'évacuation d'air secondaire (27) et un clapet anti-retour (26) à la conduite de gaz combustible (31, 45).

8. Installation selon l'une des revendications 5 à 7, caractérisée en ce que la vanne de pression de proportionnalité (20) comporte un aimant de proportionnalité à commande électrique qui par réduction de la force de l'aimant libère une liaison entre le côté de pression secondaire (A) et le côté d'évacuation d'air (R) et le gaz combustible arrive dans la conduite de gaz combustible (31, 45) par l'intermédiaire de la conduite d'évacuation d'air secondaire (27) et le clapet d'arrèt (26).

9. Installation selon l'une des revendications 5 à 8, caractérisée en ce que la conduite de pression arrière (45) de la vanne de pression de proportionnalité (20) comporte un capteur de pression (22) pour surveiller la pression de fonctionnement.

## Claims

1. Method for flame-cutting, heating, flame-descaling or welding of workpieces by means of at least one torch (9) which emits a fuel gas/oxygen or air flame and/or an oxygen jet, the gas composition of these being variable by activation of proportional valves (1, 10, 20) by means of electrical signals from a control unit, characterized in that, for each material (41) to be worked, the electrical signals are established as a function of the workpiece thickness, the fuel gas, the nozzle size, the nozzle type, the work phase and/or the torch distance and entered as input into the control system, and the control system adjusts the pressure of the gases, preset by the proportional valves, as a function of the electrical signals via a time-related adjustment of the magnetic field strength of the proportional valves (1, 10, 20), the pressure reducers (2, 11, 21) located between the gas supply sources and the torch (9) being controlled via said pressure and the gas rates flowing as a function thereof through the proportional valves (1, 10, 20).

2. Method according to Claim 1, characterized in that the electrical set value is preset as a voltage or current value by a numerical control system.

3. Method for flame-cutting of workpieces by means of at least one torch (9) which emits a fuel gas/oxygen flame and an oxygen jet, the gas composition of these being variable by activation of proportional valves by means of electrical signals from a control unit, according to one of Claims 1 or 2, characterized in that, for piercing holes, the proportional pressure valve (1) for the cutting oxygen is activated by means of electrical signals in such a way that the values of the pressure rise of the cutting oxygen are located on a function such as results from a circular cone penetrating a plane.

4. Method according to Claim 3, characterized in that the function is a hyperbola or parabola.

5. Device for controlling fuel gas and oxygen or air, with a cutting, welding, heating or flame-descaling torch (9) for the thermal treatment of workpieces (41), which torch is connected via lines (28, 29, 31, 32, 45, 46) to gas supply sources and is provided with proportional valves (1, 10, 20) which are located in the lines (28, 29, 31, 32, 45, 46) and are controllable by a control system by means of electrical signals, characterized in that the proportional valves are designed as pressure valves (1, 10, 20) and are connected to controllable pressure reducers (2, 11, 21) which are controllable by the proportional pressure valves (1, 10, 20).

6. Device according to Claim 5, characterized in that the torches (9) are precisely aligned.

7. Device according to Claim 5 or 6, characterized in that the secondary pressure side A of the proportional pressure valve (20) located in the fuel gas line is connected to the downstream pressure line (45) of the fuel gas line (31) and the venting side R thereof is connected via a secondary venting line (27) and a backflow valve (26) to the fuel gas line (31, 45).

8. Device according to one of Claims 5 to 7, characterized in that the proportional pressure valve (20) has a proportional magnet, which can be activated electrically and which, when the magnetic field strength is reduced, opens a connection between the secondary pressure side A and the venting side R, and fuel gas flows via the secondary venting line (27) and the backflow valve (26) to the fuel gas line (31, 45).

9. Device according to one of Claims 5 to 8, characterized in that a pressure sensor (22) for monitoring the working pressure is located in the downstream pressure line (45) of the proportional pressure valve (20).

FIG.1

EP 0 188 763 B1

FIG. 2

2

| Werkstuckdicke [mm] | Schneiddüse | Heizduse | Brenngasdruck Brenngas Acetylen [bar] | Heizsauerstoffdruck [bar] | Schneidsauerstoffdruck [bar] | Schneidgeschwindigkeit [mm/min] | Düsenabstand [mm] | Schnittfugenbreite [mm] | Heizsauerstoff [Volt] | Acetylen [Volt] | Schneidsauerstoff [Volt] |
|---|---|---|---|---|---|---|---|---|---|---|---|
| 3 | 3·5 | | | 2,0 | 2,0 | 850 | 4·6 | 0,8 | 2,32 | 3,74 | 1,56 |
| 4 | | | | 2,0 | 2,5 | 800 | 4·6 | 0,8 | 2,32 | 3,74 | 1,84 |
| 5 | | | | 2,5 | 3,0 | 750 | 4·6 | 0,9 | 2,88 | 4,24 | 2,13 |
| 6 | 6·10 | | | 2,5 | 4,0 | 750 | 4 6 | 1,5 | 2,88 | 4,24 | 2,78 |
| 8 | | | | 2,5 | 4,5 | 735 | 4·6 | 1,5 | 2,88 | 4,24 | 3,09 |
| 10 | | | | 2,5 | 5,0 | 700 | 4·6 | 1,7 | 2,88 | 4,24 | 3,37 |
| 10 | 10·25 | | | 2,5 | 6,5 | 700 | 5 7 | 2,1 | 2,88 | 4,24 | 4,31 |
| 15 | | | | 2,5 | 6,5 | 600 | 5 7 | 2,1 | 2,88 | 4,24 | 4,31 |
| *20 | | | | 2,5 | 7,0 | 550 | 5 7 | 2,1 | 2,88 | 4,24 | 4,60 |
| 25 | | | | 2,5 | 7,5 | 500 | 5 7 | 2,1 | 2,88 | 4,24 | 4,90 |
| 25 | 25·40 | 2·150 | 0,75 / 1,4 | 2,5 | 6,5 | 500 | 5·7 | 2,5 | 2,88 | 3,36 | 4,33 |
| 30 | | | | 2,5 | 7,5 | 480 | 5·7 | 2,7 | 2,88 | 3,36 | 4,96 |
| 35 | | | | 2,5 | 7,5 | 450 | 5·7 | 2,7 | 2,88 | 3,36 | 4,96 |
| 40 | | | | 2,5 | 8,0 | 420 | 5·7 | 2,7 | 2,88 | 3,36 | 5,26 |
| 40 | 40·60 | | | 2,5 | 6,5 | 420 | 5·7 | 2,8 | 2,88 | 3,36 | 4,35 |
| 50 | | | | 2,5 | 7,0 | 390 | 5·7 | 3,0 | 2,88 | 3,36 | 4,66 |
| 60 | | | | 2,5 | 8,5 | 360 | 5·7 | 3,0 | 2,88 | 3,36 | 5,61 |
| 60 | 60·100 | | | 2,5 | 6,5 | 360 | 5·7 | 3,0 | 2,88 | 3,54 | 4,42 |
| 80 | | | | 2,5 | 7,5 | 300 | 5·7 | 3,0 | 2,88 | 3,54 | 5,03 |
| 100 | | | | 2,5 | 8,0 | 270 | 5·7 | 3,0 | 2,88 | 3,54 | 5,35 |
| 100 | 100·150 | | | 3,5 | 6,5 | 270 | 7·10 | 3,6 | 3,98 | 4,18 | 4,44 |
| *130 | | | | 3,5 | 7,0 | 230 | 7·10 | 3,6 | 3,98 | 4,18 | 4,77 |
| 150 | | | | 3,5 | 7,0 | 210 | 7·10 | 3,6 | 3,98 | 4,18 | 4,77 |
| 150 | 150 230 | 150·300 | 0,75 / 1,4 | 6,5 | 6,5 | 210 | 20 | 5,0 | 7,30 | 6,50 | 4,60 |
| 200 | | | | 7,0 | 7,0 | 180 | 20 | 5,0 | 7,84 | 7,00 | 4,93 |
| 230 | | | | 7,5 | 7,5 | 140 | 20 | 5,0 | 8,38 | 7,50 | 5,26 |
| 230 | 230·300 | | | 6,5 | 6,5 | 150 | 25 | 6,0 | 7,30 | 6,50 | 5,00 |
| 250 | | | | 7,0 | 7,0 | 130 | 25 | 6,0 | 7,84 | 7,00 | 5,35 |
| 300 | | | | 7,5 | 7,5 | 110 | 25 | 6,0 | 8,38 | 7,50 | 5,70 |

FIG.3

| Werk-stuck-dicke [mm] | Schneid-duse | Heizduse | Brenngas-druck / Brenngas Acetylen [bar] | Heiz-sauerstoff / Brenn-schneiden [Volt] | Heizsau-erstoff / Lochstechen [Volt] | Acetylen [Volt] | Ein-schalt zeit [sec] | Schneid-sauerstoff / Brenn-schneiden [Volt] | Schneid-sauerstoff / Lochstechen [Volt] | Ein-schalt-zeit [sec] | Schneidegeschwindigkeit [mm/min] Loch-stechen | Schneidegeschwindigkeit [mm/min] Brenn-schneiden | Düsen-abstand [mm] |
|---|---|---|---|---|---|---|---|---|---|---|---|---|---|
| 10 | 10  25 | | | 2,88 | 5,64 | 5,37 | 8 | 4,31 | 0 | 0 | | 700 | 5·7 |
| 15 | | | | 2,88 | 5,64 | 5,37 | 8 | 4,31 | 0,68 | 1 | | 600 | 5·7 |
| *20 | | | | 2,88 | 5,64 | 5,37 | 10 | 4,60 | 0,68 | 1 | | 550 | 5·7 |
| 25 | | | | 2,88 | 5,64 | 5,37 | 10 | 4,90 | 0,68 | 1 | | 500 | 5·7 |
| 25 | 25·40 | | | 2,88 | 5,64 | 4,18 | 10 | 4,33 | 0,69 | 1 | | 500 | 5·7 |
| 30 | | | | 2,88 | 5,64 | 4,18 | 10 | 4,96 | 0,69 | 1 | | 480 | 5·7 |
| 40 | | | | 2,88 | 5,64 | 4,18 | 10 | 5,26 | 0,69 | 1 | | 420 | 5·7 |
| 40 | 40·60 | 2·150 | 0,75 / 1,4 | 2,88 | 5,64 | 4,18 | 12 | 4,35 | 0,70 | 1 | | 420 | 5·7 |
| 50 | | | | 2,88 | 5,64 | 4,18 | 12 | 4,66 | 0,70 | 1 | | 390 | 5·7 |
| 60 | | | | 2,88 | 5,64 | 4,18 | 12 | 5,61 | 0,70 | 1 | | 360 | 5·7 |
| 60 | 60·100 | | | 2,88 | 5,64 | 4,10 | 12 | 4,42 | 0,71 | 2 | | 360 | 5·7 |
| 70 | | | | 2,88 | 5,64 | 4,10 | 12 | 4,80 | 0,71 | 2 | | 330 | 5·7 |
| 80 | | | | 2,88 | 5,64 | 4,10 | 12 | 5,03 | 0,71 | 2 | | 300 | 5·7 |
| 90 | | | | 2,88 | 5,64 | 4,10 | 12 | 5,35 | 0,71 | 2 | | 285 | 5·7 |
| 100 | | | | 2,88 | 5,64 | 4,10 | 12 | 5,35 | 0,71 | 2 | | 270 | 5·7 |
| 100 | 100·150 | | | 3,98 | 6,74 | 4,54 | 12 | 4,44 | 0,72 | 2 | 280 | 270 | 7·10 |
| 120 | | | | 3,98 | 6,74 | 4,54 | 12 | 4,77 | 0,72 | 2 | 280 | 240 | 7·10 |
| *130 | | | | 3,98 | 6,74 | 4,54 | 12 | 4,77 | 0,72 | 2 | 280 | 230 | 7·10 |

FIG.4

EP 0 188 763 B1

FIG.5

FIG.6

EP 0 188 763 B1